# EUROPEAN PATENT APPLICATION

(11) **EP 4 779 612 A1**
(43) Date of publication of application: **22.07.2026**
(21) Application number: 25153072.1
(22) Date of filing: 21.01.2025
(51) Int. Cl.: G09B 19/00

(54) **A MARKER-FREE MOVEMENT CAPTURE SYSTEM AND A METHOD FOR MEASURING MOVEMENT OF A HUMAN BODY AND ASSOCIATED SPORT EQUIPMENT**

(71) Applicant: Elva Golf ehf., 210 Garðabær (IS)
(72) Inventor: Hjalmarsson, Helgi, 200 Kópavogur (IS); Rombouts, Jaldert Olaf, 203 Kópavogur (IS); Adalsteinsson, Gudmundur Freyr, 221 Hafnarfjordur (IS)
(74) Representative: Inspicos P/S

(57) **Abstract**

The present invention relates to a marker-free movement capture system and a method for measuring movement of a human body and associated sport equipment while performing a sport activity in natural field space characteristic for the sport. A first camera is positioned at a first fixed location relative to an image capturing space, configured to capture image data of the human body and the associated sport equipment during the sport activity within the image capturing space. At least one second camera is provided positioned at one or more second fixed locations relative to the image capturing space, configured to capture image data of the human body and the associated sport equipment during the sport activity simultaneous to the first camera within the image capturing space. A computer system receives and processes the image data collected by the first camera and the at least one second camera. At least one mobile carrier is provided for carrying the first and the at least one second camera, and a control unit is configured to instruct the at least one mobile carrier together with the cameras to move to the a natural field space, wherein, in response to detecting an action executed by the human within the first natural field space, the image data captured by the first and at least one second camera, collected over a predefined time window encompassing both before and after the detected action, is provided as input to the computer system to calculate the human's movement

## Description

### FIELD OF THE INVENTION

The present invention relates to a marker-free movement capture system and a method for measuring movement of a human body while performing a sport activity in natural field space characteristic for the sport.

### BACKGROUND OF THE INVENTION

Golf training booths are commonly used to improve golfers' swing mechanics and overall performance through technologies like cameras and simulators. However, these booths have key limitations.

Current booths lack mobility, as they are typically large, fixed installations requiring dedicated spaces, limiting convenience and accessibility. High accuracy in performance analysis often depends on intrusive markers or sensors attached to the user, which can disrupt natural movements. Additionally, these booths fail to realistically simulate golf course conditions, offering only limited replication of environmental factors such as wind or terrain.

There is a clear need for a portable, marker-free training solution that provides accurate analysis and a more immersive golfing experience, addressing the shortcomings of existing technologies.

### SUMMARY OF THE INVENTION

It is an object of the invention to provide a more versatile golf training system, enabling golfers to practice under real golf course conditions.

In a first aspect of the invention, a marker-free movement capture system for measuring movement of a human body and associated sport equipment while performing a sport activity in a natural field space characteristic for the sport, comprising:
- a first camera positioned at a first fixed location relative to an image capturing space, configured to capture image data of the human body and the associated sport equipment during the sport activity within the image capturing space,
- at least one second camera positioned at one or more second fixed locations relative to the image capturing space, configured to capture image data of the human body and the associated sport equipment during the sport activity within the image capturing space simultaneous to the first camera,
- a computer system for receiving and processing the image data collected by the first camera and the at least one second camera,
wherein the system further comprises:
- at least one mobile carrier for carrying the first and the at least one second camera,
- a control unit,

wherein the control unit is configured to instruct the at least one mobile carrier together with the cameras to move to a first natural field space,
wherein, in response to detecting an action executed by the human within the first natural field space, the image data captured by the first and at least one second camera, collected over a predefined time window encompassing both before and after the detected action, is provided as input to the computer system to calculate the human's movement and the associated sport equipment.

In an embodiment, the sport is golf, the human is a golfer, the associated sport equipment includes a golf club and a golf ball, where the first natural field space includes a first space within a golf course,
wherein the human's and the associated sport equipment movement calculated over the predefined time window includes the golf swing executed by the golfer before and after the golfer strikes the golf ball to a second natural field space, where the detected action corresponds to the moment where the golfer strikes the golf ball.

The term 'image capturing space' can in an alternative embodiment be understood, for example, as a dedicated area such as a golf training booth, where image data is collected and all necessary calibration processes can be performed. This includes, but is not limited to, intrinsic calibration, which addresses the camera's internal parameters such as focal length and lens distortion, and extrinsic calibration, which determines the spatial position and orientation of the camera relative to the surrounding environment or other cameras in the setup.

The term capture image data may according to the present invention be understood as a process of recording digital image data by acquiring a series of images preferably at high frequency (i.e., a high number of frames per second). This high-frequency capturing enables as an example the creation of a highly accurate and detailed video file, allowing precise visualization and analysis of fast-moving objects or events. The captured image data typically consists of sequential frames that, when combined, form a continuous representation of motion, ensuring smooth playback and reliable data for applications such as motion tracking and video analysis. Data capturing at high frequency further enables not only accurate calculation of movement but also of speed and acceleration of the movements.

Accordingly, a portable and marker-free system is provided that overcomes the key limitations of traditional golf training booths and that allows golfers to practice under real golf course conditions. This includes scenarios such as practicing driving, using irons, or putting, catering to players of all skill levels.

To ensure the accuracy of the detection of the action, high-speed digital camera(s) may be employed capable of capturing a rapid sequence of images, allowing for precise tracking of the golf ball's movement before, during, and immediately after the strike. By leveraging this high frame rate, the system can reliably identify the exact moment when the ball leaves the field of view, ensuring that the detected action aligns closely with the golfer's strike. This approach is particularly effective in scenarios requiring high precision, such as analyzing the dynamics of a golf swing or optimizing performance in a simulated or natural environment.

The cameras may include cameras that cater to various use cases, from analyzing fast-moving events capable of recording at extremely high frame rates, to capturing exceptionally detailed images and videos, just to mention few examples.

The computer system may be an external computer system such as any type of a cloud server, or a mobile computer system such as a laptop, or any type of a "home-based" computer.

By utilizing only the captured image data collected over the predefined time window it is ensured that the system processes only the essential image data captured within a predefined time window, ensuring efficient use of processing power for movement analysis. The predefined time window may include time t1 before the action detected and t2 after the detected action, where the predefined time window is t=t1+t2. The time t1 and t2 may depend on the sport activity, where as an example for golf, t1 and t2 may be equal and be around 1 sec., whereas for other sport activities, t1 and t2 may differ and be less or more than 1 sec.. Preferably, irrespective of the sport activity, t1 and t2 may be adjustable, even by the human exercising the sport activity. As an example, in case the sport activity is golf, t1 and t2 may be selected such that t1=t2.

Further, there is considerable advantage in recording a golf swing on a golf course or in a training area, where players encounter challenges that differ significantly from those in a booth setting. These challenges include varying surfaces where the ball lies (such as fairway, green, bunker, sand, roads, high grass, or rough), sloped terrain affecting the ball's position or the player's stance, and diverse weather conditions. Additionally, the player gains a clear view of the target, which can influence the shot. For instance, the shot might need to be very high to stop the ball on the green or curved left or right to avoid obstacles like trees between the ball and the target. Thus, the system according to the present invention enables swing measurements that are reliable, accurate, and fast, ideally matching the performance and precision of similar hardware in a booth setting under optimal conditions.

In an embodiment, the system further comprises a display configured to display the results of the analyzed movement of the human body. In that way, in case the sport activity is golf, the golfer may be provided with immediate feedback based on the analyzed movements of the golfer's body and/or the golf club. The players and/or coaches may also access the video and the data offline when connected to a computer device which makes the system not dependent on wireless communication. This of course also applies for other types of sports.

In an embodiment, the marker-free movement capture system further comprises a location triggering device configured to trigger the first location data of the first natural field space utilized by the control unit. The location triggering device may comprise any type of a portable computer, such as a mobile phone, e.g. carried by the golfer where the triggering may be performed by the golfer.

In an embodiment, the marker-free movement capture system further comprises a direction triggering device for triggering direction data, in response to a command from the user or the golfer, indicating the intended trajectory of the golf ball. Both the location triggering device and the direction triggering device may be built into one and the same device, e.g. a mobile phone, where the direction triggering device may be a built in compass on the mobile phone where e.g. via pointing the mobile phone to the intended direction, and via any type of triggering command from e.g. the golfer, the direction data may be triggered.

In an embodiment, the at least one mobile carrier comprises an Unmanned Aerial Vehicle (UAV) such as a drone. The mobile carrier can be a single unit carrying a camera or multiple carriers, each equipped to hold one or more cameras. Each mobile carrier, when paired with a camera, functions as a single operational unit - for instance, a single drone equipped with one or more cameras.

An advantage of utilizing drones as mobile carriers is their ability to move dynamically and adapt to different positions and angles, ensuring optimal camera placement for capturing detailed and precise data. For example, multiple drones working in coordination can provide comprehensive coverage of an event or action, such as a golf swing, from various perspectives.

Furthermore, equipping a single drone with multiple cameras can unlock the potential for advanced imaging capabilities, such as creating high-resolution 3D images or videos. This setup mimics the approach used by Apple for the VisionPro, where synchronized camera systems are used to capture depth and spatial information. The ability to generate 3D images in real time provides a significant advantage for applications such as motion analysis, enabling more detailed and accurate feedback to the user. This could be particularly beneficial in sports like golf, where precise biomechanical feedback can enhance performance and reduce the risk of injury by identifying and correcting improper techniques.

A specific implementation of this concept could involve outfitting a drone with three camera lenses, each oriented differently and equipped with varying focal lengths. The camera hardware could be configured to use only one lens at a time, akin to the setup commonly found on modern mobile phones. To ensure stability and consistency during recording, a preferred configuration would keep the drone positioned horizontally in the air, as this orientation provides the most stable platform for capturing high-quality footage.

In an embodiment, the at least one more mobile carrier includes a first and at least one second mobile carrier, where the control unit is further configured to move the mobile carriers to position the cameras at the first and the at least one second fixed location relative to the human, and to instruct the mobile carriers to position the cameras at the corresponding fixed location relative to the human, ensuring that the relative positioning of the cameras is preserved. The position of the cameras and internal calibration may as an example be optimized in a golf training booth, where e.g a first camera in the training booth is located in front of the golf player at a position (x1 ,y1 ,z1), another camera is located sidewise relative to the golf player at second position (x2,y2,z2), and a third camera is located at a position (x3,y3,z3) etc., where under this fixed location the cameras are calibrated. These internal coordinates are then maintained at the sports field, e.g. at the golf course. The number of cameras may in an alternative embodiment be two or more. Accordingly, referring to the example where the sport is golf, by remaining this positioning of the cameras is fixed, a reliable and accurate movement measurement of the golfer and/or the golf club is provided. These positions may be stored within the control unit.

The control unit can be integrated into one or all of the mobile carriers and/or can be part of an external control computer.

The control unit is in an alternative embodiment further configured to, subsequent to striking the golf ball to the second natural field space, to instruct the first and the at least one second mobile carriers together with the cameras to move to the second natural field space in response to a second location data within the golf course. This may be repeated throughout the golf course exercise while the golfer exercises with different golf clubs, for example driving, using irons, chipping or putting.

In an embodiment, each of the cameras comprises a communication module for sending the captured image data to the computer system where it is processed.

In an embodiment, the image data is stored in a storage medium, e.g. in the cameras, where a selected number of swings could then be uploaded to the computer system at some later time point.

According to a second aspect of the invention, a method is provided for measuring movement of a human body and associated sport equipment while performing a sport activity in natural field space characteristic for the sport, comprising:
- positioning a first camera at a first fixed location relative to an image capturing space, configured to capture image data of the human body and the associate sport equipment during the sport activity within the image capturing space,
- positioning at least one second camera at one or more second fixed locations relative to the image capturing space, configured to capture image data of the human body and the associate sport equipment during the sport activity within the image capturing space simultaneous to the first camera,
- receiving and processing the image data collected by the first camera and the at least one second camera by a computer system,
wherein the method further comprises:
- providing at least one mobile carrier for carrying the first and the at least one second camera,
- instructing the at least one mobile carrier together with the cameras to move to a first natural field space,
wherein, in response to detecting an action executed by the human within the first natural field space, the image data captured by the first and at least one second cameras, collected over a predefined time window encompassing both before and after the detected action, is provided as input to the computer system to calculate the human's movement and the associated sport equipment.

The sport, may according to the present invention include, but is not limited to, tennis, skiing, ball sport, just to mention a few, where the sport equipment is a tennis racket, skis and ski poles, and football.

In an embodiment, according to the method, the sport is golf, the human is a golfer, the associated sport equipment includes a golf club and a golf ball, where the first natural field space includes a first space within a golf course,
wherein the human's movement and the associated sport equipment calculated over the predefined time window includes the golf swing executed by the golfer before and after the golfer strikes the golf ball to a second natural field space, where the detected action corresponds to the moment where the golfer strikes the golf ball, where the at least one more mobile carrier includes a first and at least one second mobile carrier, where the method further comprises:
- moving the first mobile carrier to position the first camera at the first fixed location relative to the human,
- moving the at least one second mobile carrier to position the at least one second camera to the corresponding to at least one fixed location relative to the human, ensuring that the relative positioning of the cameras is maintained.

In a preferred embodiment, the method further comprises performing a calibration on the first camera and the at least one second camera while positioned at the first and at least one second fixed locations, prior to capturing the image data. The multiple cameras can furthermore be calibrated simultaneously in a process to obtain the full 3D location of the multiple cameras.

In another embodiment, the method further comprises performing a calibration on the first camera and the at least one second camera within the first natural field space. In that embodiment the multiple cameras can furthermore be calibrated simultaneously in a process to obtain the full 3D location of the multiple cameras.

In an embodiment, a drone with calibration object that may be used for extrinsic calibration and to be flown into the natural field space such that a calibration can be formed fully automatically ensuring that measurements performed in that natural field space with the set location of the cameras will be more accurate.

In an embodiment, the calibration includes one or more of:
- performing an intrinsic calibration,
- performing an extrinsic calibration,
- using charuco boards when making the calibration.

Using charuco board is commonly used when calibrating cameras used to obtain accurate 3D measurements of objects and as well in golf booths. Similar calibration may be repeated on the first camera and the at least one second camera within the first natural field space, such as using again such charuco boards or similar means that are useful in calibrating the camera. This ensured high accuracy and quality in the movement measurement.

Intrinsic calibration focuses typically on the camera's internal properties, such as focal length, principal point, and lens distortion, to correct image distortions and map 3D points to the camera's 2D image plane, whereas the extrinsic calibration determines the camera's position and orientation relative to an external coordinate system or other cameras, enabling spatial alignment for tasks like 3D reconstruction or multi-camera setups.

Together, these calibrations ensure accurate imaging and precise spatial mapping for applications such as robotics, motion tracking, and augmented reality.

In an embodiment, the human, e.g. the golfer, may wear clothing, e.g. a shirt, having specific patterns that may be utilized to make the necessary calibration at the golf field. The special clothing or marking can furthermore be used to improve the accuracy of the motion tracking if it is worn during the captured activity. Some special marking can furthermore be used on the sports equipment to improve accuracy.

Further, the first and the at least one second mobile carriers may in an embodiment comprise a positioning module configured to internally position the mobile carriers within the first natural field space before performing the calibration as mentioned above.

Accordingly, the improved method provides valuable feedback to the golfer, which can significantly enhance the golfer's performance. This feedback may include detailed analysis of the golf club's motion, such as its speed, angle, and trajectory, enabling the golfer to refine their swing technique. Additionally, the system offers insights into the biomechanics of the golfer's movements by tracking and displaying the rotations and positions of key body parts, including the pelvis, upper torso, arms, and hands.

For instance, the feedback can highlight the degree of rotation of the pelvis during the backswing and follow-through, which is critical for generating power and maintaining balance. It can also show how the upper torso aligns and rotates in relation to the pelvis, providing cues on improving swing mechanics and reducing strain on the body. Furthermore, by monitoring the movements of the arms and hands, the system can identify inefficiencies, such as improper wrist angles or timing issues during the downswing, and suggest corrections to achieve better accuracy and consistency.

This comprehensive feedback not only helps golfers make incremental improvements to their form but also facilitates a deeper understanding of how each element of their body's motion contributes to the overall swing. By leveraging this data, golfers can achieve greater control, optimize their performance, and reduce the risk of injury, ultimately enhancing their overall experience on the course or in the simulator.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figure 1 illustrates graphically a marker-free motion capture booth system comprising five cameras,
Figure 2 illustrates a system according to the present invention, which replicates the setup of the golf booth shown in figure 1 in a first natural field space,
Figure 3 provides a detailed illustration of a scenario where the detected action is associated with the moment the golfer (not shown) strikes the golf ball using a golf club, and
Figure 4 shows a flowchart of a method according to the present invention for measuring movement of a human body while performing a sport activity in natural field space characteristic for the sport.

### DESCRIPTION OF EMBODIMENTS

The present invention relates to a marker-free movement capture system for measuring movement of a human body and associated sport equipment while performing a sport activity.

In the following, for simplicity, it will be assumed that the sport is golf, the associated sport equipment includes a golf club and a golf ball, and where the human is a golfer executing a golf swing with a golf club.

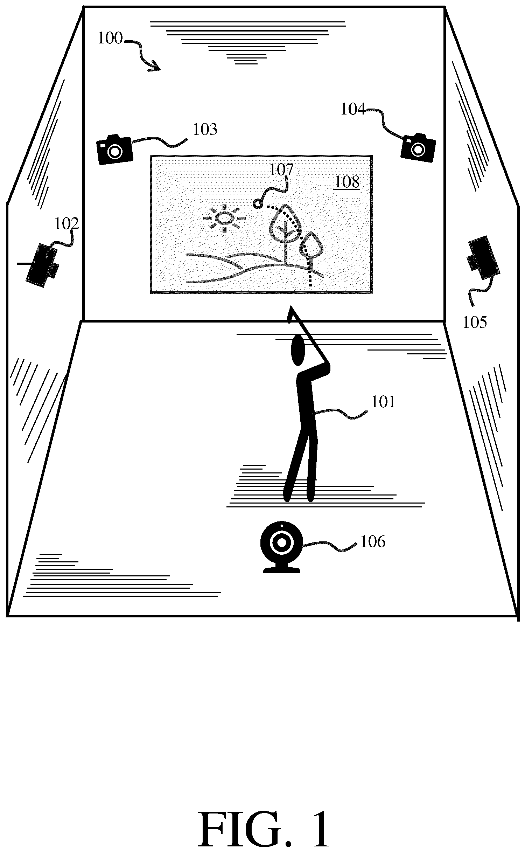

Figure 1 illustrates graphically a marker-free motion capture booth system 100 comprising five cameras 102-106 that have been calibrated e.g. via intrinsic and/or extrinsic calibration, where the cameras are positioned at fixed locations relative to each other and the golfer 101 while the golfer is practicing a golf swing and strikes the golf ball 107 toward a durable projection screen 108, which forms part of a simulator setup displaying a virtual golf course or practice environment.

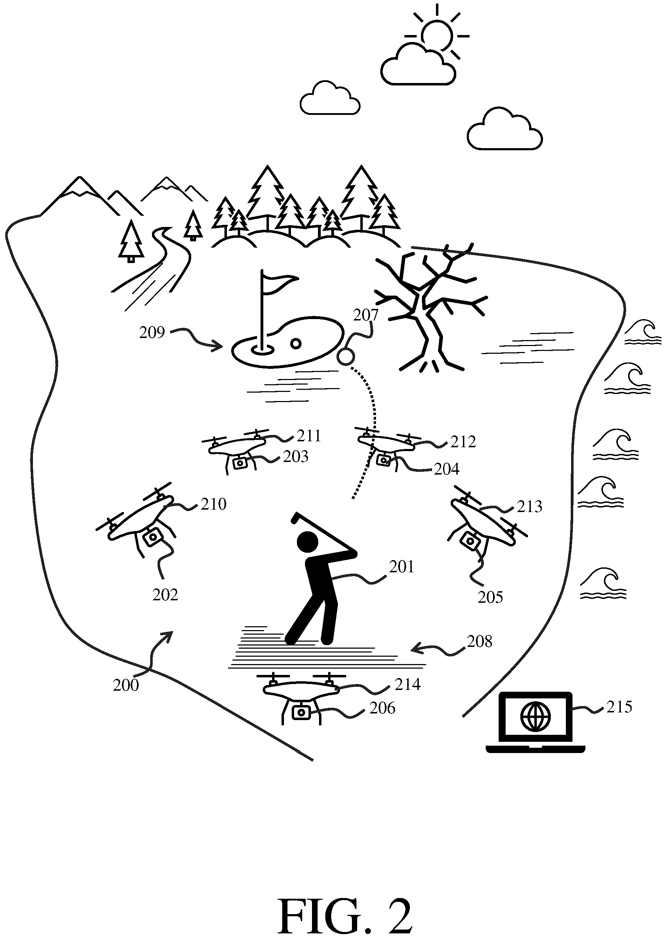

Figure 2 illustrates a system 200 according to the present invention, which replicates the setup of the golf booth shown in figure 1. In this configuration, the golfer strikes a golf ball in a first natural field space 208. The system comprises five cameras 202-206 mounted on separate drones 210-214. The number of cameras in Figures 1 and 2 can vary, being fewer or greater than five. Additionally, the cameras in Figure 2 may be integrated directly into the drones.

The system 200 further comprises a control unit and a computer system 215, where the control unit is configured, among other functions, to manage the drones 210-214, and the computer system is configured to receive and process the image data captured by the cameras 202-206. The control unit may either be a processor integrated into the computer system 215 or be distributed as part of the drones and cameras.

The image data processed by the computer system 215 includes image data collected over a predefined time window encompassing both before and after a detected action, which in this scenario is where the golfer strikes the golf ball from the first natural field space 208 to the second natural field space 209.

In an alternative embodiment, the cameras 202-206 may be calibrated with some regular intervals or upon a request by the golfer, e.g. using charuco boards (not shown) or similar means that are useful in calibrating the camera.

In another alternative embodiment, the cameras 202-206 rely on the calibration performed e.g. in a golf booth, such as the one shown in figure 1, where it ensured that the internal position between the cameras 202-206 and the golfer 201 is essentially the same as shown in figure 1.

The golfer might even wear clothing, e.g. a shirt, having a specific pattern that may be utilized to make the necessary calibration at the golf field.

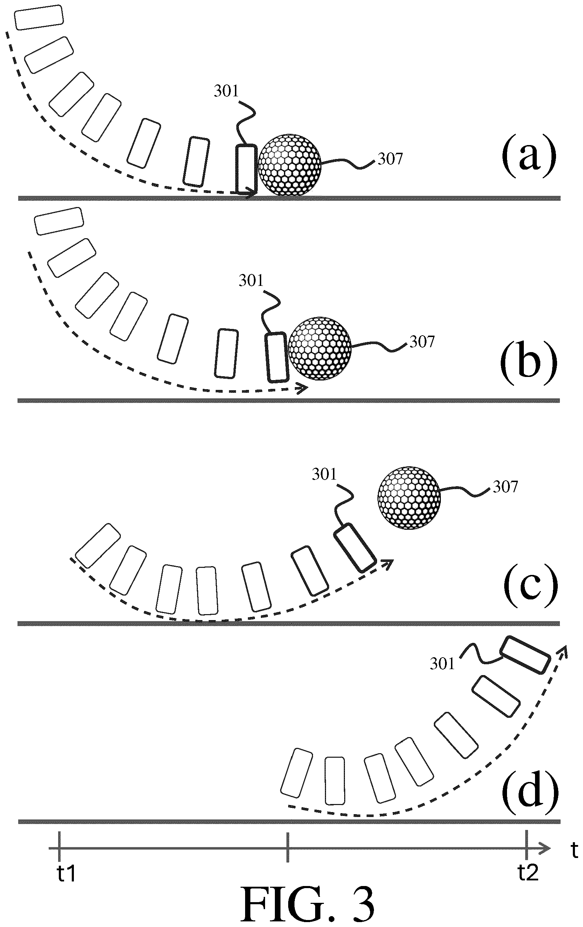

Figure 3 provides a detailed illustration of a scenario where the detected action is associated with the moment the golfer (not shown) that moves a golf club (show schematically) that strikes the golf ball 307 using a golf club 301. The golf club utilized in this context could be one of several types, including a driver, an iron, or a putter, depending on the specific shot being practiced or executed. The detection of this action may be achieved by monitoring the motion of the golf ball, with the triggering event occurring when the ball is no longer visible within the captured image frames. This disappearance serves as a clear indication that the ball has been struck and is in motion.

To ensure the accuracy of this detection, high-speed digital cameras may be employed. These cameras are capable of capturing a rapid sequence of images, allowing for precise tracking of the golf ball's movement before, during, and immediately after the strike. By leveraging this high frame rate, the system can reliably identify the exact moment when the ball leaves the field of view, ensuring that the detected action aligns closely with the golfer's strike. This approach is particularly effective in scenarios requiring high precision, such as analyzing the dynamics of a golf swing or optimizing performance in a simulated or natural environment.

The predefined time window may include time t1 before the action detected and t2 after the detected action, where the predefined time window is t=t1+t2.

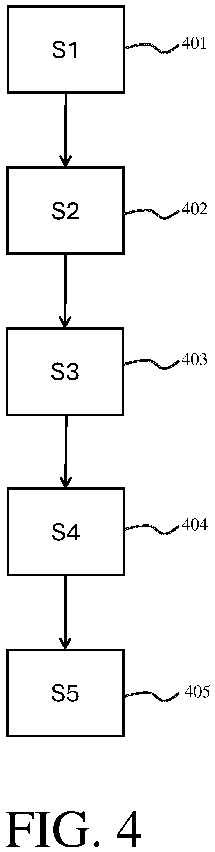

Figure 4 shows a flowchart of a method according to the present invention for measuring movement of a human body and associated sport equipment while performing a sport activity in natural field space characteristic for the sport.

In a first step (S1) 401, a first camera is positioned at a first fixed location relative to an image capturing space, configured to capture image data of the human body and the associated sport equipment during the sport activity within the image capturing space. In a second step (S2) 402, at least one second camera is positioned at one or more second fixed locations relative to the image capturing space, configured to capture image data of the human body as well as the appropriate sports equipment during the sport activity simultaneous to the first camera. The cameras are calibrated such as by performing an intrinsic calibration, on the first camera and the at least one second camera while positioned at the first and at least one second fixed locations, prior to capturing image data capture.

In a third step (S3) 403, the image data is received and processing the image data collected by the first camera and the at least one second camera by a computer system which may as an example include any type of computer system platform.

In a fourth step (S4) 404, at least one mobile carrier is provided, e.g. one carrier for one camera, for carrying the cameras.

In a fifth step (S5) 405, the at least one mobile carrier together with the cameras is instructed to move to the first natural field space. In response to detecting an action executed by the human within the natural field space, the image data captured by the first and at least one second camera, collected over a predefined time window encompassing both before and after the detected action, is provided as input to the computer system to calculate the human's movement as well as movement of any appropriate sports equipment.

As discussed in relation to previous figures, the sport may include any type of sport, tennis, skiing, or golf the sport as discussed in relation to figures 1 to 3.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A marker-free movement capture system for measuring movement of a human body and associated sport equipment while performing a sport activity in natural field space characteristic for the sport, comprising:
• a first camera positioned at a first fixed location relative to an image capturing space, configured to capture image data of the human body and the associated sport equipment during the sport activity within the image capturing space,
• at least one second camera positioned at one or more second fixed locations relative to the image capturing space, configured to capture image data of the human body and the associated sport equipment during the sport activity within the image capturing space simultaneous to the first camera,
• a computer system for receiving and processing the image data collected by the first camera and the at least one second camera,
wherein the system further comprises:
• at least one mobile carrier for carrying the first and the at least one second camera,
• a control unit,
wherein the control unit is configured to instruct the at least one mobile carrier together with the cameras to move to a first natural field space,
wherein, in response to detecting an action executed by the human within the first natural field space, the image data captured by the first and at least one second camera, collected over a predefined time window encompassing both before and after the detected action, is provided as input to the computer system to calculate the human's movement and the associated sport equipment.

2. The marker-free movement capture system according to claim 1, wherein the sport is golf, the human is a golfer, the associated sport equipment includes a golf club and a golf ball, where the first natural field space includes a first space within a golf course, wherein the human's movement and the associated sport equipment calculated over the predefined time window includes the golf swing executed by the golfer before and after the golfer strikes the golf ball to a second natural field space, where the detected action corresponds to the moment where the golfer strikes the golf ball.

3. The marker-free movement capture system according to claim 1 or 2, further comprising a location triggering device configured to trigger the first location data of the first natural field space.

4. The marker-free movement capture system according to claims 2 or 3, further comprising a direction triggering device for triggering direction data, in response to a command from the user, indicating the intended trajectory of the golf ball.

5. The marker-free movement capture system according to any of the preceding claims, wherein the at least one more mobile carrier includes a first and at least one second mobile carrier, where the control unit is further configured to move the mobile carriers to position the cameras at the first and the at least one second fixed location relative to the human, and to instruct the mobile carriers to position the cameras at the corresponding fixed location relative to the human, ensuring that the relative positioning of the cameras is preserved.

6. The marker-free movement capture system according to any of the preceding claims, wherein the first and the at least one second mobile carriers comprise Unmanned Aerial Vehicle (UAV) such as a drone.

7. The marker-free movement capture system according to any of the claims 2 to 6, wherein subsequent to striking the golf ball to the second natural field space, the control unit instruct the at least one mobile carrier together with the cameras to move to the second natural field space in response to a second location data within the golf course.

8. The marker-free movement capture system according to any of the preceding claims, further comprising a display configured to display the results of the analyzed movement of the human body.

9. A method for measuring movement of a human body and associated sport equipment while performing a sport activity in a natural field space characteristic for the sport, comprising:
• positioning a first camera at a first fixed location relative to an image capturing space, configured to capture image data of the human body and the associated sport equipment during the sport activity within the image capturing space,
• positioning at least one second camera at one or more second fixed locations relative to the image capturing space, configured to capture image data of the human body and the associated sport equipment during the sport activity within the image capturing space simultaneous to the first camera,
• receiving and processing the image data collected by the first camera and the at least one second camera by a computer system,
wherein the method further comprises:
• providing at least one mobile carrier for carrying the cameras,
• instructing the at least one mobile carrier together with the cameras to move to a first natural field space,
wherein, in response to detecting an action executed by the human within the first natural field space, the image data captured by the first and at least one second camera, collected over a predefined time window encompassing both before and after the detected action, is provided as input to the computer system to calculate the human's movement and the associated sport equipment.

10. The method according to claim 9, wherein the sport is golf, the human is a golfer, the associated sport equipment includes a golf club and a golf ball, where the first natural field space includes a first space within a golf course,
wherein the human's movement and the associated sport equipment calculated over the predefined time window includes the golf swing executed by the golfer before and after the golfer strikes the golf ball to a second natural field space, where the detected action corresponds to the moment where the golfer strikes the golf ball, where the at least one more mobile carrier includes a first and at least one second mobile carrier, wherein the method further comprises:
• moving the first mobile carrier to position the first camera at the first fixed location relative to the human,
• moving the at least one second mobile carrier to position the at least one second camera to the corresponding to at least one fixed location relative to the human, ensuring that the relative positioning of the cameras is maintained.

11. The method of any of claims 9 or 10, further comprising performing a calibration on the first camera and the at least one second camera while positioned at the first and at least one second fixed locations, prior to capturing image data capture.

12. The method of any of claims 9 to 11, further comprising performing a calibration on the first camera and the at least one second camera within the first natural field space.

13. The method according to claim 11 or 12, wherein the calibration includes one or more of:
• performing an intrinsic calibration,
• performing an extrinsic calibration,
• using charuco boards when making the calibration.

14. The method of claim 13, wherein the first and the at least one second mobile carriers include a positioning module configured to internally position the mobile carriers within the first natural field space before performing the calibration.

15. The method according to any of the claims 9 to 14, wherein the sport is selected from: tennis where the associated sport equipment includes tennis racket and a tennis ball, ball sport such as socker where the associated sport equipment include a football, rugby where the associated sport equipment is a rugby ball, baseball where the associated sport equipment is a basketball, skiing where the associated sport equipment includes skis and ski poles, sled sports and where the associated sport equipment include sled.
